# EUROPEAN PATENT APPLICATION

(11) **EP 3 594 872 A1**
(43) Date of publication of application: **15.01.2020**
(21) Application number: 19180547.2
(22) Date of filing: 17.06.2019
(51) Int. Cl.: G06Q 10/08

(54) **A METHOD FOR FOOD ITEM MONITORING, A FOOD PACKAGE SYSTEM AND AN ELECTRONIC DEVICE**

(30) Priority: 11.07.2018 EP 18182877
(71) Applicant: Tetra Laval Holdings & Finance S.A., 1009 Pully (CH)
(72) Inventor: BAST, Tim, 24731 Södra Sandby (SE)
(74) Representative: Tetra Pak - Patent Attorneys SE

(57) **Abstract**

The present disclosure provides a method, performed by an electronic device, for food item monitoring. The method comprises obtaining a food item identifier indicative of a food item. The method comprises obtaining first event data associated with the food item identifier. The first event data is associated with a first event and is indicative of a first event type and a first event time of the first event. The method comprises determining a first value of a food status parameter of the food item at the time of the first event. The method comprises estimating, based on a model for the food status parameter of the food item, a primary value of the food status parameter of the food item, the model having the first event type, and the first event time as input. The method comprises outputting the primary value of the food status parameter.

## Description

The present disclosure pertains to the field of food item monitoring. More particularly, the present disclosure relates to a method for food item monitoring, a food package system and an electronic device.

### BACKGROUND

Today, information regarding a food item to consumers is limited to data printed on a package, such as expiry dates and nutritional information. This leads to a large waste of food because consumers have a tendency to dispose food items which may still be edible for a period of time despite the data printed on the package. There is also a growing interest to receive more detailed information about the nutritional value of the food item. Some of this information is variable over time as some nutrients such as vitamins have a tendency to decay over time. Storage conditions such as temperature also have impact on the time dependence of certain nutritional parameters.

### SUMMARY

Accordingly, there is a need for methods, food package systems and electronic devices which provide an improved monitoring of a food item, leading to an improved intake or utilization of the food item at an advantageous state (e.g. an advantageous vitamin content), and/or eventually leading to reducing food waste.

It is an object of the present disclosure to provide an improvement of monitoring of the food item.

The present disclosure provides a method, performed by an electronic device, for food item monitoring. The method comprises obtaining a food item identifier indicative of a food item. The method comprises obtaining first event data associated with the food item identifier. The first event data is associated with a first event and is indicative of a first event type and a first event time of the first event. The method comprises determining a first value of a food status parameter of the food item at the time of the first event. The method comprises estimating, based on a model for the food status parameter of the food item, a primary value of the food status parameter of the food item, the model having the first event type, and the first event time as input. The method comprises outputting the primary value of the food status parameter.

The present disclosure relates to a food package system comprising a food item server device, the food item server device comprising an interface, a memory, and one or more processors. The food item server device is configured to obtain a food item identifier indicative of a food item. The food item server device is configured to obtain first event data associated with the food item identifier. The first event data is associated with a first event and is indicative of a first event type and a first event time of the first event. The food item server device is configured to determine a first value of a food status parameter of the food item at the time of the first event. The food item server device is configured to estimate, based on a model for the food status parameter of the food item, a primary value of the food status parameter of the food item, the model having the first event type and the first event time as input. The food item server device is configured to output the primary value of the food status parameter.

The present disclosure relates to a computer-readable storage medium storing one or more programs, the one or more programs comprising instructions which, when executed by a food item server device comprising one or more processors, cause the food item server device to perform any of the methods disclosed herein.

The present disclosure provides an electronic device comprising an interface, a memory, and one or more processors; and one or more programs stored in the memory and configured to be executed by the one or more processors, the one or more programs including instructions for performing any of the methods disclosed herein The present disclosure provides a computer-readable storage medium storing one or more programs, the one or more programs comprising instructions which, when executed by an electronic device comprising one or more processors, cause the electronic device to perform any of the methods disclosed herein.

It may be appreciated that this disclosure advantageously provides a dynamic monitoring of the food status parameter by monitoring the dynamic internal state of the food item. This allows for example a user (e.g. a consumer) of a food item to have access to further information that would not otherwise be available: e.g. a consumer is able to obtain information immediately that is timely, and relevant, with improved accuracy regarding a food item e.g. to be purchased, to be consumed. The present disclosure advantageously enables a detection of any deviation of a property of the food item from an accepted standard, and thereby this disclosure may be seen as enhancing food safety.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
Fig. 1 schematically illustrates an exemplary food item monitoring system according to this disclosure,
Figs. 2A-2B are flow diagrams of an exemplary method performed by an electronic device according to the disclosure,
Fig. 3 schematically illustrates an exemplary food item server device according to the disclosure, and
Fig. 4 schematically illustrates an exemplary electronic device according to the disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

There is a need for obtaining more detailed information about a food item. Some of this information is variable over time as some nutrients, such as vitamins, have a tendency to decay over time. Storage conditions such as temperature also have impact on the time dependence of certain nutritional parameters, and thereby on a food status parameter of a food item.

Many challenges are posed when attempting to provide information regarding a time-varying food status parameter of a food item. For example, providing at any time a food status parameter representative of a state (e.g. current or future state) of the food item represents a challenge. There exists uncertainty for determining a food status parameter, e.g. future food status parameter, e.g. at packaging. For example, a food item may comprise one or more parts and measuring a food status parameter in each relevant part of the food item represents a challenge. The present disclosure aims at alleviating or mitigating these challenges.

The present disclosure provides a method, performed by an electronic device, for food item monitoring. The method comprises obtaining a food item identifier indicative of a food item. The method comprises obtaining first event data associated with the food item identifier. The first event data is associated with a first event and is indicative of a first event type and a first event time of the first event. The method comprises determining a first value of a food status parameter of the food item at the time of the first event. The method comprises estimating, optionally based on a model for the food status parameter of the food item, a primary value of the food status parameter of the food item, the model having the first event type, and the first event time as input. The method comprises outputting the primary value of the food status parameter.

It may be appreciated that the disclosed method advantageously provides a dynamic monitoring of the food status parameter. This allows generating information that would not otherwise be available in certain situations. For example, a consumer is able to obtain information that is timely, relevant, with improved accuracy regarding a food item e.g. to be purchased, to be consumed. The present disclosure advantageously enables a detection of any deviation of a property of the food item from an accepted standard.

An electronic device refers herein to a computing device capable of carrying any of the methods disclosed herein. An electronic device may comprise a user-controlled electronic device (e.g. a client device). Non-limiting examples of an electronic device include an electronic device (e.g. a fixed electronic device and/or a portable electronic device, and/or a wireless electronic device (e.g. a mobile device, a tablet device, and/or a laptop device)).

The method comprises obtaining a food item identifier indicative of a food item by e.g. receiving and/or retrieving the food item identifier e.g. from the food item, such as from a package associated with the food item. For example, the food item identifier is a unique identifier of a package associated the food item. In other words, the food item identifier may be seen as an identifier uniquely identifying the food item. The food item identifier may be obtainable from the food item under handling or under monitoring. For example, the food item identifier may be associated with a code (e.g. an optically readable code) and/or a signal (e.g. using a Radio-Frequency Identification, RFID, and/or a near-field communication, NFC, system, and/or magnetic signal) that enables the electronic device to obtain food item identifier.

The method comprises obtaining first event data associated with the food item identifier. The first event data is associated with a first event and is indicative of a first event type and a first event time of the first event. Optionally, the first event data comprises a first event type, and a first event time of the first event. Optionally, the first event data comprises a first event type identifier.

It may be envisaged in the present disclosure, that event data (e.g. first event data, second event data, and/or third event data) is associated with an event and is indicative of an event type and an event time of the event. Optionally, the event data comprises an event type, and an event time of the event. Optionally, the event data comprises an event type identifier. An event time may comprise a timestamp indicative of a start and/or end of an event and/or a specific point in time during the event, and/or after the event and/or before the event.

For example, obtaining first event data associated with the food item identifier comprises receiving and/or retrieving the first event data based on the food item identifier from a database comprising event data.

In one or more exemplary methods and electronic devices, the method comprises determining a first value of a food status parameter of the food item at the time of the first event by obtaining the first value of the food status parameter at the time of the first event, and/or by establishing the first value of the food status parameter at the time of the first event. A first value may comprise an average value, with e.g. a standard deviation, and/or a variance.

A food item may comprise one or more parts. The food status parameter may also vary between different parts of the food item. A value of the food status parameter (e.g. a first value, and/or a primary value) may comprise a representative value of the food status parameter, such as an average over values established for each part of the food item. It may be appreciated that to precisely measure the food status parameter in each relevant part of the food item at the time of the first event is challenging. A value of the food status parameter (e.g. a first value, and/or a primary value) may comprise an average value established within an accuracy margin. The present disclosure aims at providing information related to the food status parameter within an accuracy margin.

The food status parameter may be seen as a status parameter of the food item characterizing a physical property of the food item e.g.: consumption quality, vitamin content, a bacterial content, oxidation level, degradation level, contaminant level, aroma, texture, water content, and/or nutritious content. The food status parameter may be seen as a status parameter of the food item characterizing an attribute of the food item, e.g. a price of the food item. Non-limiting examples of food status parameter comprise an indicator indicating that the food item is edible or non-edible, a degradation parameter, vitamin content parameter, bacterial growth parameter, bacterial content parameter, oxidation parameter, aroma parameter, texture parameter, food price parameter, expiry date parameter, water content parameter, a nutritious content parameter.

The method comprises estimating, based on a model for the food status parameter of the food item, a primary value of the food status parameter of the food item. The model has the first event type, and the first event time as input. Stated differently, the model takes as input, inter alia: the first event type, and the first event time. A primary value may be indicative of one or more physical properties or attribute of the food item e.g.: consumption quality, vitamin content, a bacterial content, oxidation level, degradation level, aroma, texture, water content, and/or nutritious content. Also, in one or more exemplary methods and electronic devices, the estimated primary value may be seen as a value updated based on the first value, e.g. a value updated based on the first event, e.g. a value updated to reflect a food status parameter at a point in time where the method is carried out. It may also be appreciated that the estimated primary value may be seen as a predicted value of the food status parameter.

In one or more exemplary methods and electronic devices, estimating, based on a model for the food status parameter of the food item, a primary value of the food status parameter of the food item comprises estimating a set of primary values based on the model for the food status parameter of the food item. A set of primary values may comprise one or more primary values e.g. as a function of time. A set of primary values may comprise one or more primary values representable on a graph. A primary value may comprise an average value, with e.g. a standard deviation, and/or a variance. In one or more exemplary methods and electronic devices, estimating, based on a model for the food status parameter of the food item, a primary value of the food status parameter of the food item comprises estimating, based on a model for the food status parameter of the food item, a secondary value of the food status parameter of the food item, and optionally a tertiary value of the food status parameter of the food item, and optionally a quaternary value of the food status parameter of the food item. A secondary value may be indicative of one or more physical properties or attribute of the food item e.g.: consumption quality, vitamin content, a bacterial content, oxidation level, degradation level, aroma, texture, water content, and/or nutritious content.

A tertiary value may be indicative of one or more physical properties or attribute of the food item e.g.: consumption quality, vitamin content, a bacterial content, oxidation level, degradation level, aroma, texture, water content, and/or nutritious content.

A quaternary value may be indicative of one or more physical properties or attribute of the food item e.g.: consumption quality, vitamin content, a bacterial content, oxidation level, degradation level, aroma, texture, water content, and/or nutritious content.

The primary value may comprise a time value where a food status parameter satisfies one or more criteria (e.g. meeting one or more thresholds). For example, this may support in estimating a time window for consumption (e.g. to avoid food poisoning).

In one or more exemplary methods and electronic devices, the model comprises one or more input parameters including the first event type, and the first event time, and optionally the food item identifier (identifying a group of food items, or uniquely identifying the food item), and one or more output parameters including the primary value (and optionally the secondary value, and optionally the tertiary value). In one or more exemplary methods and electronic devices, the model comprises an operation mapping the input parameter to provide one or more output parameters including the primary value. The operation may comprise querying a look-up table (e.g. a lookup table indexing the food item identifier, the first event type, and the first event type) and obtaining a response comprising the primary value. The operation may comprise one or more mappings between the one or more input parameters and the one or more output parameters. A mapping may comprise a linear mapping with a food item coefficient, or a non-linear, such as exponential, mapping with one or more food item factors and/or a logical mapping comprising one or more logical expressions and/or criteria. It may be envisaged that the model is parametrized by one or more internal parameters, such as a model parameter, a food item coefficient, and/or one or more food item factors. It may be envisaged that internal parameters of the model may be stored in a food item medium storage (e.g. a specific part of a memory of the electronic device). The model may comprise a data structure, one or more internal parameters, and/or one or more operations. Example of models may comprise a neural network- based model, e.g. a Markov-based model, wherein an internal parameter may be indicative of a probability distribution characterizing the food item. In one or more embodiments, the model may be based on differential equations wherein an internal parameter may be indicative of an order of the differential equation.

The food status parameter may comprise a first value and/or a primary value indicative of a property of the food item.

In an illustrative example where the disclosed technique is applied, a primary value, PV, of the food status parameter, may be indicative of consumption quality (e.g. edible or non-edible), wherein the primary value, also denoted PV, is set to edible if a model parameter, MP, indicative of estimated bacterial content of the food item, is less than a primary threshold, also denoted P_TH.

In other words, PV="edible" if MP < P_TH_1 and PV="non-edible" if MP ≥ P_TH_2. P_TH_1 may be equal to or different from (e.g. smaller than) P_TH_2.

In one or more exemplary methods and electronic devices, the method comprises outputting the primary value of the food status parameter by transmitting the primary value and/or storing the primary value. In one or more exemplary methods and electronic devices, the method comprises outputting the primary value of the food status parameter by monitoring a process or the food item based on the primary value of the food status parameter, and/or by controlling an external device based on the primary value. In one or more exemplary methods and electronic devices, the method comprises outputting the primary value of the food status parameter by displaying the primary value on a display module of the electronic device.

In one or more exemplary methods and electronic devices, outputting the primary value of the food status parameter comprises outputting the set of primary values of the food status parameter e.g. by output an estimate curve representative of the set of primary values of the food status parameter e.g. as a function of time.

In one or more exemplary methods and electronic devices, the first event is a packaging event indicative of packaging of the food item associated with the package, e.g. indicative of a sealing time of the package. For example, the first event as a packaging event is associated with a first event type indicative of packaging, and a first event time indicative of a sealing time of the package. At packaging, it may be appreciated that there exists uncertainty in determining a value of a food status parameter for e.g. a future point in time. The present disclosure provides a method of estimating, e.g. at packaging, a value of a food status parameter for e.g. a future point in time primary value, based on the disclosed model.

In one or more exemplary methods and electronic devices, the method comprises obtaining food batch data of the food item. In one or more exemplary methods and electronic devices, the model for the food status parameter of the food item has the food batch data as input. The food batch data may comprise a food batch identifier, and/or a food batch content parameter. For example, the model takes as input, inter alia: food batch data, including e.g. a food batch identifier, and/or a food batch content parameter. For example, estimating the primary value may be based on a model including the food batch data as input.

In one or more exemplary methods and electronic devices, the method comprises obtaining package data of the package. In one or more exemplary methods and electronic devices, the model for the food status parameter of the food item has the package data as input. Optionally the package data comprises a package identifier (e.g. a unique identifier of the package), a package material parameter, one or more packaging environment parameters, one or more packaging handling parameters (e.g. gas content parameter), one or more package property parameter (e.g. a package shape type). For example, the model takes as input, inter alia: the package data including one or more of: a package identifier (e.g. a unique identifier of the package), a package material parameter, one or more packaging environment parameters, one or more packaging handling parameters (e.g. gas content parameter), one or more package property parameter (e.g. a package shape type). In one or more exemplary methods and electronic devices, the package identifier may serve as a food item identifier. For example, estimating the primary value may be based on a model including the package data as input.

In one or more exemplary methods and electronic devices, the method comprises obtaining second event data associated with the food item identifier. The second event data is associated with a second event and is indicative of a second event type and a second event time of the second event. In one or more exemplary methods and electronic devices, the model for the food status parameter of the food item has the second event type and the second event time as input. Optionally, the second event data comprises a first second type, and a second event time of the second event. Optionally, the second event data comprises a second event type identifier. Optionally, the second event data comprises one or more environmental parameters associated with the second event. For example, the model takes as input, inter alia: the second event data including e.g. one or more of: the second event type and the second event time and second event type identifier, and optionally the one or more environmental parameters associated with the second event. In one or more exemplary methods and electronic devices, the second event is a sale event indicative of sale of the food item to a consumer. For example, the second event as a sale event is associated with a second event type indicative of the sale of the food item to a consumer, and a second event time indicative of a time of sale of the package. For example, estimating the primary value may be based on a model including the second event data as input. The present disclosure may advantageously provide a primary value for the food status parameter at any point before sale, at sale, during sale, and after sale. It may be appreciated that the present disclosure provides an additional information that is timely relevant to the user, and which may not be accessible otherwise, and in turn increases accuracy of the food status parameter. The present disclosure therefore enhances the monitoring of the food item and thereby allows an improved handling of the food item for sale and possibly an improved inventory process, and possibly reducing food waste.

In one or more exemplary methods and electronic devices, the method comprises obtaining third event data associated with the food item identifier. In one or more exemplary methods and electronic devices, the third event data is associated with a third event and is indicative of a third event type and a third event time of the third event. In one or more exemplary methods and electronic devices, the model for the food status parameter of the food item has the third event type and the third event time as input. Optionally, the third event data comprises a third event type, and a third event time of the third event. Optionally, the third event data comprises a third event type identifier. Optionally, the third event data comprises one or more environmental parameters associated with the third event. For example, an environmental parameter comprises a temperature parameter, a pressure parameter, a humidity parameter, and/or a light parameter. For example, an environmental parameter may comprise one or more timestamps.

In an illustrative example where a food item is associated with a package which comprises a sensor configured to measure one or more environment parameters during and/or before the third event and to transmit the one or more environment parameters with the third event data to the electronic device, the electronic device disclosed herein is capable of determining a relation between the third event data including one or more environment parameters and of estimating the primary value (by e.g. establishing environment curve during and/or before the third event optionally as a function of time, such a temperature curve during and/or before the third event optionally as a function of time). For example, the model takes as input, inter alia: the third event type and the third event time and optionally the third event type identifier and/or one or more environment parameters. In other words, estimating the primary value may be based on a model including the third event data as input. In one or more exemplary methods and electronic devices, the third event is a storage event indicative of storage of the food item (e.g. physical storage of the food item). For example, the third event is a storage event indicative of storage of the food item, e.g. at a consumer location, at a shop, at a warehouse, at a transporter facility, at a production facility, at a packaging facility, and/or during transport. It may be appreciated that the present disclosure advantageously provides a monitoring of the food status parameter during storage, independently of the entity performing the storage. This thereby may be seen as advantageous in detecting an unacceptable storage condition for a food item, due to e.g. detrimental storage conditions.

In one or more exemplary methods and electronic devices, the method comprises obtaining a food status parameter identifier, and selecting the model for the food status parameter of the food item based on the food status parameter identifier. For example, the food status parameter identifier is indicative of the target food status parameter to be estimated as a primary value and output, e.g. indicative of one or more of: consumption quality, best-before-date, bacteria content, vitamin content, degradation level, oxidation level, aroma parameter, texture parameter. Depending on the nature of the food status parameter as indicated by the food status parameter identifier, one or more models may be used to estimate the primary value of the food status parameter. In other words, estimating the primary value may be based on a model selected based on the food status parameter identifier. It may be appreciated that this may lead to an improved accuracy in the estimation of the primary value.

In one or more exemplary methods and electronic devices, the food status parameter identifier is indicative of the target food status parameter to be estimated as a primary value, e.g. a current primary value of the food status parameter estimated for the current time, and/or a future primary value of the food status parameter estimated for a time in the future. In one or more exemplary methods and electronic devices, estimating the primary value comprises predicting and/or anticipating the primary value at a time in the future, e.g. in N days (where N is integer, e.g. in the range from 1 to 10).

In one or more exemplary methods and electronic devices, obtaining a food item identifier comprises receiving a monitoring request comprising the food item identifier. A monitoring request may be seen as a request for obtaining a value characterizing the food status parameter for a specified food item (e.g. identified by the food item identifier), e.g. the primary value disclosed herein. Depending on the nature of the food item as indicated by the food item identifier, one or more models may be used to estimate the primary value of the food status parameter for the food item identified.

In one or more exemplary methods and electronic devices, outputting the primary value of the food status parameter comprises transmitting the primary value to an external electronic device (e.g. an external server, and/or a user-controlled electronic device). In one or more exemplary methods and electronic devices, transmitting the primary value to an external electronic device may comprise transmitting the primary value in a monitoring response to the sender of the monitoring request.

In one or more exemplary methods and electronic devices, the method comprises obtaining environment data indicative of an environment of the food item. Environment data may comprise one or more environment parameters (e.g. a temperature parameter, a pressure parameter, a humidity parameter, and/or a light parameter (e.g. UV light parameter), e.g. amount of solar exposure) obtained at the electronic device, e.g. derived based localization data, e.g. obtained from a sensor of the package of the food item, e.g. obtained from an external device (e.g. a mobile terminal of a user purchasing the food item). In one or more exemplary methods and electronic devices, the model for the food status parameter of the food item has the environment data as input. The environment data may include an environment profile (e.g. a temperature profile vs. time, a pressure profile vs. time, light profile vs. time and/or a humidity profile vs. time). An environment profile associated with the food item may be representing the environment data between any two of: the first event, the second event and the third event, by using e.g. the mobile terminal of user. In other words, estimating the primary value may be based on a model including the environment data as input.

In one or more exemplary methods and electronic devices, the method comprises obtaining a time parameter. In one or more exemplary methods and electronic devices, the model for the food status parameter of the food item has the time parameter as input. The time parameter may comprise a time parameter related to the monitoring request, e.g. time of receipt of monitoring request, time indicator included in the monitoring request, e.g. current time of receipt and/or transmission of the monitoring request, time of obtaining of the food item identifier, elapsed time since an event, remaining time to expiry date, time difference since previous monitoring request, or since previous event, time of breaking the package (e.g. breaking the seal of the package, e.g. exposing the food item to oxygen, e.g. by opening the package). The time parameter may comprise a periodicity. In other words, estimating the primary value may be based on a model including the time parameter as input. This way, the disclosure may provide one or more primary values tailored or representative of a point in time or a time window (as target in a monitoring request).

It is to be understood that description of the first, second and third events are also applicable to any number of events related to monitoring of the food item (e.g. a fourth event optionally being an opening event indicative of opening the seal of the package).

The present disclosure provides an electronic device comprising an interface, one or more processors; a memory. The electronic device is configured to obtain a food item identifier indicative of a food item. The electronic device is configured to obtain first event data associated with the food item identifier. The first event data is associated with a first event and is indicative of a first event type and a first event time of the first event. The electronic device is configured to determine a first value of a food status parameter of the food item at the time of the first event. The electronic device is configured to estimate, based on a model for the food status parameter of the food item, a primary value of the food status parameter of the food item, the model having the first event type and the first event time as input. The electronic device is configured to output the primary value of the food status parameter.

The present disclosure relates to a food package system. The food package system comprises a food item server device. The food item server device comprises an interface, a memory, and one or more processors. A food item server device is seen as a computing device configured to communicate with one or more electronic devices and/or to act as a server for an electronic device acting as a client.

The food item server device is configured to obtain a food item identifier indicative of a food item. The food item server device is configured to obtain first event data associated with the food item identifier. The first event data is associated with a first event and is indicative of a first event type and a first event time of the first event. The food item server device is configured to determine a first value of a food status parameter of the food item at the time of the first event. The food item server device is configured to estimate, based on a model for the food status parameter of the food item, a primary value of the food status parameter of the food item, the model having the first event type and the first event time as input. The food item server device is configured to output the primary value of the food status parameter.

In one or more exemplary food package systems, the food package system comprises an electronic device configured to perform to any of the methods disclosed herein.

The food package system may comprise one or more packaging machines configured to communicate with the food item server device.

The food item server device may be configured to communicate with a client device, the client device requesting a food status parameter from the food item server device.

The present disclosure relates to a computer-readable storage medium storing one or more programs, the one or more programs comprising instructions which, when executed by a food item server device comprising one or more processors, cause the food item server device to perform the methods disclosed herein.

The present disclosure provides an electronic device comprising an interface, one or more processors; a memory; and one or more programs stored in the memory and configured to be executed by the one or more processors, the one or more programs including instructions for performing any of the methods disclosed herein.

The present disclosure provides computer program comprising instructions which, when the program is executed by an electronic device, cause the electronic device to carry out any of the methods disclosed herein.

The figures are schematic and simplified for clarity, and they merely show details which are essential to the understanding of the invention, while other details have been left out. Throughout, the same reference numerals are used for identical or corresponding parts.

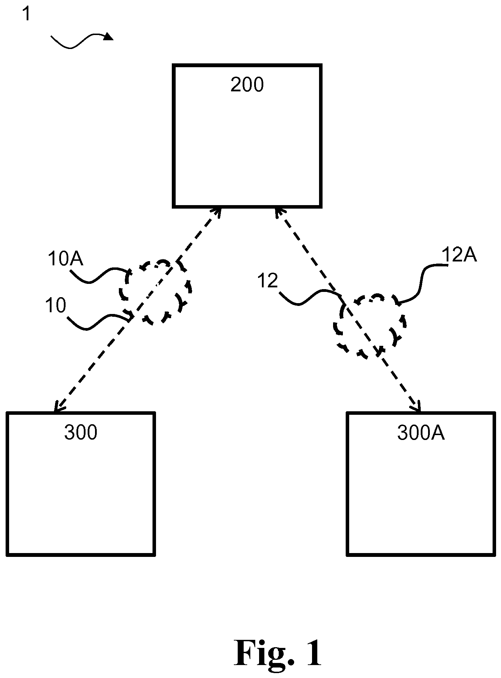

Fig. 1 shows an exemplary food item monitoring system 1 according to the disclosure. The food item monitoring system 1 may comprise a food package system (e.g. a food package system disclosed herein, e.g. a food package system). The food item monitoring system 1 may comprise a food packaging system, a food transportation system, a food purchase system, and/or a home appliance system.

A home appliance system may comprise one or more home appliance devices (e.g. a refrigerator device, a freezer device, a wine storage device) and optionally a user-controlled device.

The food item monitoring system 1 comprises a food item server device 200. In one or more exemplary food item monitoring system, the food item server device 200 is configured to obtain a food item identifier indicative of a food item. In one or more exemplary food item monitoring system, the food item server device 200 is configured to obtain first event data associated with the food item identifier, wherein the first event data is associated with a first event and is indicative of a first event type and a first event time of the first event. In one or more exemplary food item monitoring system, the food item server device 200 is configured to determine a first value of a food status parameter of the food item at the time of the first event. In one or more exemplary food item monitoring system, the food item server device 200 is configured to estimate, based on a model for the food status parameter of the food item, a primary value of the food status parameter of the food item, the model having the first event type and the first event time as input; and output the primary value of the food status parameter.

In one or more exemplary food item monitoring system, the food item monitoring system 1 comprises one or more electronic devices 300, 300A.

In one or more exemplary food item monitoring system, the food item server device 200 is configured to communicate via a communication link 10, 12 with one or more electronic devices 300, 300A using a communication system or a communication network 10A, 12A respectively. The communication system or communication network comprises a wired communication system (e.g. Internet Protocol-based system, and/or Ethernet-based system) and/or a wireless communication system (e.g. a short-range communication system (e.g. a near-field communication system, a Bluetooth system, an ultra-wide band system, Zigbee, IEEE 802.11) and/or a cellular communication system (e.g. a 3^{rd} Generation Partnership Project, 3GPP, cellular system), and/or a wireless local area network system (e.g. IEEE 802.11)). The one or more electronic devices 300, 300A may comprise one or more of: a fixed electronic device and/or a portable electronic device, and/or a wireless electronic device (e.g. a mobile device, a tablet device, and/or a laptop device)). The one or more electronic devices 300, 300A may comprise a user-controlled device (e.g. a device controlled by a consumer of the food item, a device controlled by a user of a packaging facility user (e.g. an employee of a packaging facility), a device controlled by a vendor user, a device controlled by a distributor facility user, a device controlled by a transporter user, a device controlled by a user of a production facility, a device controlled by an employee of a shop).

In one or more exemplary food item monitoring system, the food item server device 200 is seen as a computing device configured to communicate with one or more electronic devices 300, 300A and/or to act as a server for an electronic device 300, 300A acting as a client. In other words, a food item server device 200 is optionally configured to receive a monitoring request from one or more electronic devices 300, 300A and provide a monitoring response back. The monitoring request may comprise a food item identifier associated with the food item to be monitored. The monitoring response may comprise the primary value estimated as disclosed herein.

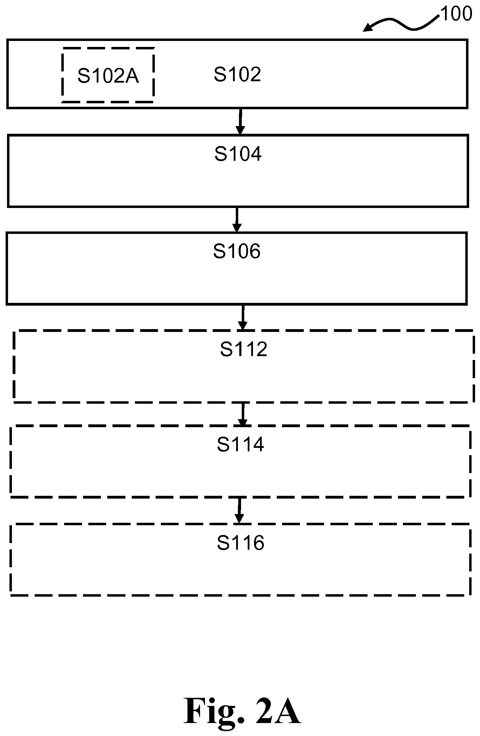

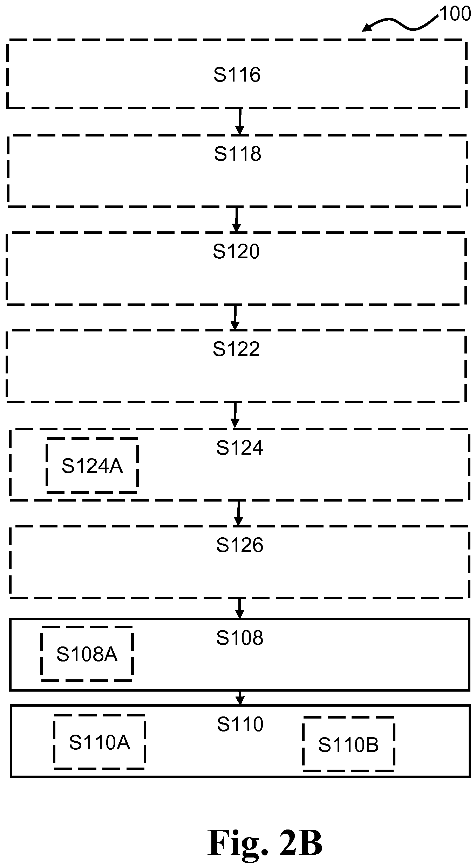

Figs. 2A-2B show flow diagrams illustrating an exemplary method 100 performed by an electronic device (e.g. electronic device disclosed herein, e.g. electronic device 300) according to this disclosure. The method 100 is performed by an electronic device, for food item monitoring.

The method 100 comprises obtaining S102 a food item identifier indicative of a food item, by e.g. receiving and/or retrieving the food item identifier e.g. from the food item and/or a package of the food item. For example, the food item identifier is a unique identifier of a package associated the food item.

The method comprises obtaining S104 first event data associated with the food item identifier (e.g. by receiving and/or retrieving the first event data based on the food item identifier). The first event data is associated with a first event and is indicative of a first event type and a first event time of the first event. Optionally, obtaining S104 first event data associated with the food item identifier the first event data comprises obtaining a first event type, and a first event time of the first event, (and optionally a first event type identifier). For example, the method 100 may comprise identifying an indicator of a first event, and obtaining S104 the first event data associated with the food item identifier in response to identification of the indicator of the first event. An indicator of a first event may comprise a signal, e.g. a wireless signal.

The method 100 comprises determining S106 a first value of a food status parameter of the food item at the time of the first event e.g. by obtaining and/or by establishing at the time of the first event the first value of the food status parameter, e.g. one or more first values indicative of: consumption quality, vitamin content, a bacterial content, oxidation level, degradation level, aroma, texture, water content, nutritious content, and/or a price of the food item.

In one or more exemplary methods and electronic devices, the method 100 comprises obtaining S112 food batch data of the food item. The model for the food status parameter of the food item may have the food batch data as input. For example, estimating S108 the primary value may be based on a model including the food batch data.

In one or more exemplary methods and electronic devices, the method 100 comprises obtaining S114 package data of the package, and wherein the model for the food status parameter of the food item has the package data as input. In other words, estimating S108 the primary value may be based on a model including the package data as input, e.g. a package identifier (e.g. a unique identifier of the package), a package material parameter, one or more packaging environment parameters, one or more packaging handling parameters (e.g. gas content parameter), one or more package property parameter (e.g. a package shape type).

In one or more exemplary methods and electronic devices, the method 100 comprises obtaining S116 second event data associated with the food item identifier. For example, the second event data is associated with a second event and is indicative of a second event type and a second event time of the second event. In one or more exemplary methods and electronic devices, the model for the food status parameter of the food item has the second event type and the second event time as input. Optionally, the second event data comprises a first second type, and a second event time of the second event. Optionally, the second event data comprises a second event type identifier. In one or more exemplary methods and electronic devices, the second event is a sale event indicative of sale of the food item to a consumer. For example, estimating S108 the primary value may be based on a model including the second event data as input. In other words, the present disclosure may provide a primary value for the food status parameter at any point before sale, at sale, during sale, and after sale.

In one or more exemplary methods and electronic devices, the method 100 comprises obtaining S118 third event data associated with the food item identifier, wherein the third event data is associated with a third event and is indicative of a third event type and a third event time of the third event, and wherein the model for the food status parameter of the food item has the third event type and the third event time as input. In one or more exemplary methods and electronic devices, the third event is a storage event indicative of storage of the food item. Optionally, the third event data comprises a third event type, and a third event time of the third event. Optionally, the third event data comprises a third event type identifier. For example, estimating S108 the primary value may be based on a model including the third event data as input. It may be appreciated that the present disclosure advantageously provides a monitoring of the food status parameter during storage, independently of the entity performing the storage.

In one or more exemplary methods and electronic devices, the method 100 comprises obtaining S120 a food status parameter identifier, and selecting S122 the model for the food status parameter of the food item based on the food status parameter identifier. Depending on the nature of the food status parameter as indicated by the food status parameter identifier, one or more models may be used to estimate the primary value of the food status parameter. Also, estimating S108 the primary value may be based on a model selected based on the food status parameter identifier.

In one or more exemplary methods and electronic devices, obtaining S102 a food item identifier comprises receiving S102A a monitoring request comprising the food item identifier. Depending on the nature of the food item as indicated by the food item identifier, one or more models may be used to estimate the primary value of the food status parameter for the food item identified. In one or more exemplary methods and electronic devices, outputting S110 the primary value of the food status parameter comprises transmitting S110B the primary value to an external electronic device. For example, transmitting S110B the primary value to an external electronic device may comprise transmitting the primary value in a monitoring response to the sender of the monitoring request.

In one or more exemplary methods and electronic devices, the method 100 comprises obtaining S124 environment data indicative of an environment of the food item. The model for the food status parameter of the food item may have the environment data as input. Also, estimating S108 the primary value may be based on a model including the environment data as input, such as one or more environment parameters (e.g. a temperature parameter, a pressure parameter, a humidity parameter, and/or a light parameter, e.g. amount of solar exposure) obtained at the electronic device, e.g. derived based localization data, e.g. obtained from a sensor of the package of the food item, e.g. obtained from an external device (e.g. a mobile terminal of a user purchasing the food item).

In one or more exemplary methods and electronic devices, the method 100 comprises obtaining S126 a time parameter. The model for the food status parameter of the food item may have the time parameter as input. Estimating S108 the primary value may be based on a model including the time parameter as input, such as a time parameter related to the monitoring request, e.g. time of receipt of monitoring request, time indicator included in the monitoring request, e.g. current time of receipt and/or transmission of the monitoring request, time of obtaining of the food item identifier, elapsed time since an event, remaining time to expiry date, time difference since previous monitoring request, or since previous event.

The method 100 comprises estimating S108, based on a model for the food status parameter of the food item, a primary value of the food status parameter of the food item. The model has the first event type, and the first event time as input. In one or more exemplary methods and electronic devices, estimating S108, based on the model for the food status parameter of the food item, the primary value of the food status parameter of the food item comprises estimating S108A a set of primary values. In one or more exemplary methods and electronic devices, estimating S108, based on the model for the food status parameter of the food item, the primary value of the food status parameter of the food item comprises estimating the primary value using a model for the food status parameter of the food item which comprises a data structure indicative of the food item, one or more internal parameters characterizing the food item, and/or one or more operations.

The method 100 comprises outputting S110 the primary value of the food status parameter. In one or more exemplary methods and electronic devices, outputting S110 the primary value of the food status parameter comprises outputting S110A the set of primary values of the food status parameter. The method 100 may comprise outputting S110 by transmitting the primary value and/or storing the primary value. In one or more exemplary methods and electronic devices, the method 100 comprises outputting S110 the primary value of the food status parameter by monitoring a process or the food item based on the primary value of the food status parameter, and/or by controlling an external device based on the primary value. In one or more exemplary methods and electronic devices, the method comprises outputting the primary value of the food status parameter by displaying the primary value on a display module of the electronic device.

In one or more exemplary methods and electronic devices, outputting the primary value of the food status parameter comprises outputting the set of primary values of the food status parameter e.g. by output an estimate curve representative of the set of primary values of the food status parameter.

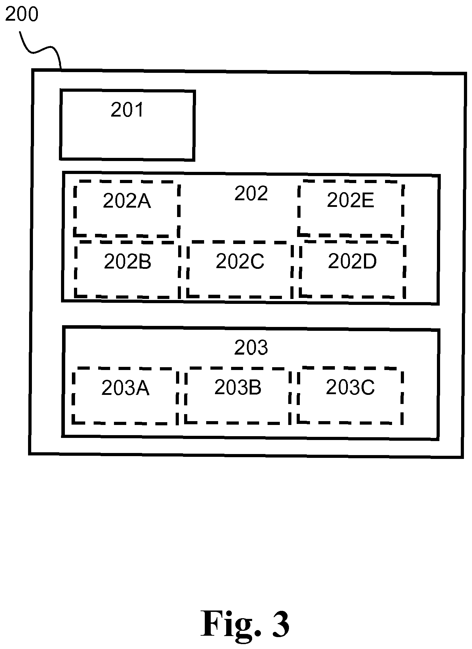

Fig. 3 is a block diagram illustrating an exemplary food item server device 200 according to the disclosure. The food item server device 200 comprises an interface 201, a memory 202, and one or more processors 203. The food item server device 200 may be configured to act as a server for an electronic device acting as a client.

The food item server device 200 or the interface 201 may be configured to communicate with one or more electronic devices, using a communication system or a communication network. The communication system or communication network comprises a wired communication system (e.g. Internet Protocol-based system, and/or Ethernet-based system) and/or a wireless communication system (e.g. a short-range communication system (e.g. a near-field communication system, a Bluetooth system, an ultra-wide band system, Zigbee, IEEE 802.11, and/or RFID) and/or a cellular communication system (e.g. a 3^{rd} Generation Partnership Project, 3GPP, cellular system), and/or a wireless local area network system (e.g. IEEE 802.11)).

The food item server device 200 or the one or more processors 203 is configured to obtain a food item identifier 202E indicative of a food item, e.g. via the interface 201 from an external device, and/or e.g. from the memory 202. The one or more processors 203 may comprise an obtainer module 203A configured to obtain a food item identifier indicative of a food item.

The food item server device 200 or the one or more processors 203 is configured to obtain first event data associated with the food item identifier, e.g. using the obtainer module 203A. The first event data is associated with a first event and is indicative of a first event type and a first event time of the first event.

The food item server device 200 is configured to determine, via the one or more processors 203, a first value of a food status parameter of the food item at the time of the first event. The one or more processors 203 may comprise a determiner module 203B configured to determine, via the one or more processors 203, a first value of a food status parameter of the food item at the time of the first event.

The food item server device 200 or the one or more processors 203 is configured to estimate, based on a model for the food status parameter of the food item, a primary value of the food status parameter of the food item, the model having the first event type and the first event time as input. The one or more processors 203 may comprise a determiner module 203C configured to estimate, based on a model for the food status parameter of the food item, a primary value of the food status parameter of the food item.

The food item server device 200 or the one or more processors 203 is configured to output the primary value of the food status parameter, e.g. via the interface 201.

The interface 201 may be configured to transmit the primary value to an external device, e.g. an electronic device acting as a client, e.g. in a monitoring response to a sender of a monitoring request.

The interface 201 may be configured to display the primary value to a user.

The one or more processors 203 may be configured to output the primary value by controlling and/or monitoring a process based on the primary value of the food status parameter. Example of a process include a packaging process, a production process, a purchase process, a transportation process, and/or a storage process.

The one or more processors 203 are optionally configured to perform any of the operations disclosed in Figs. 2A-2B. The operations of the food item server device 200 may be embodied in the form of executable logic routines (e.g., lines of code, software programs, etc.) that are stored on a non-transitory computer readable medium (e.g., the memory 202) and are executed by the one or more processors 203).

Furthermore, the operations of the food item server device 200 may be considered a method that the food item server device 200 is configured to carry out. Also, while the described functions and operations may be implemented in software, such functionality may as well be carried out via dedicated hardware or firmware, or some combination of hardware, firmware and/or software.

The memory 202 may be one or more of a buffer, a flash memory, a hard drive, a removable media, a volatile memory, a non-volatile memory, a random access memory (RAM), or other suitable device. In a typical arrangement, the memory 202 may include a non-volatile memory for long term data storage and a volatile memory that functions as system memory for the one or more processors 203. The memory 202 may exchange data with the one or more processors 203 over a data bus. Control lines and an address bus between the memory 202 and the one or more processors 203 also may be present (not shown in Fig. 3). The memory 202 is considered a non-transitory computer readable medium.

The memory 202 may be configured to store in a part of the memory the model, such as a model parameter 202A, a data structure 202B, one or more internal parameters 202C, and/or the one or more operations 202D of the model.

The memory 202 may be configured to store in a part of the memory a food item identifier 202E indicative of the food item (e.g. after obtaining food item identifier 302E).

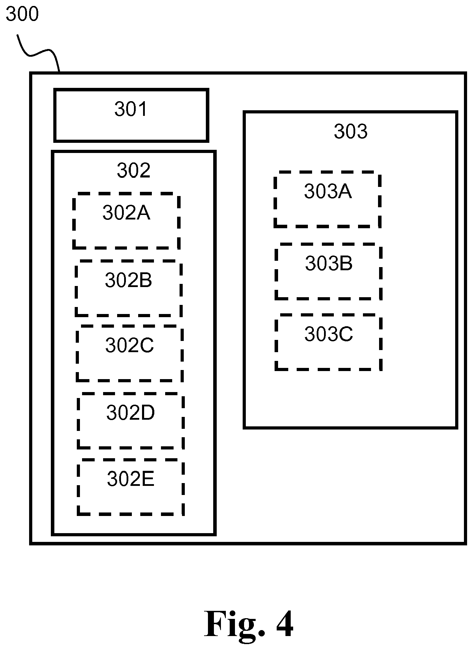

Fig. 4 is a block diagram illustrating an exemplary electronic device 300 according to the disclosure

The electronic device 300 comprises an interface 301, a memory 302, and one or more processors 303.

The electronic device 300 or the interface 301 may be configured to communicate with one or more external electronic devices, using a communication system or a communication network. The communication system or communication network comprises a wired communication system (e.g. Internet Protocol-based system, and/or Ethernet-based system) and/or a wireless communication system (e.g. a short-range communication system (e.g. a near-field communication system, a Bluetooth system, an ultra-wide band system, Zigbee, IEEE 802.11, and/or RFID) and/or a cellular communication system (e.g. a 3^{rd} Generation Partnership Project, 3GPP, cellular system), and/or a wireless local area network system (e.g. IEEE 802.11)).

The electronic device 300 or the one or more processors 303 is configured to obtain a food item identifier 302E indicative of a food item, e.g. via the interface 301 from an external device, and/or e.g. from the memory 302. The one or more processors 303 may comprise an obtainer module 303A configured to obtain a food item identifier indicative of a food item. The memory 302 may be configured to store in a part of the memory a food item identifier 302E indicative of the food item (e.g. after obtaining food item identifier 302E).

The electronic device 300 or the one or more processors 303 is configured to obtain first event data associated with the food item identifier, e.g. using the obtainer module 303A. The first event data is associated with a first event and is indicative of a first event type and a first event time of the first event.

The electronic device 300 is configured to determine, via the one or more processors 303, a first value of a food status parameter of the food item at the time of the first event. The one or more processors 303 may comprise a determiner module 303B configured to determine, via the one or more processors 303, a first value of a food status parameter of the food item at the time of the first event.

The electronic device 300 or the one or more processors 303 is configured to estimate, based on a model for the food status parameter of the food item, a primary value of the food status parameter of the food item, the model having the first event type and the first event time as input. The one or more processors 303 may comprise a determiner module 303C configured to estimate, based on a model for the food status parameter of the food item, a primary value of the food status parameter of the food item. The memory 302 may be configured to store in a part of the memory the model, such as a model parameter 302A, a data structure 302B, one or more internal parameters 302C, and/or the one or more operations 302D of the model.

The electronic device 300 or the one or more processors 303 is configured to output the primary value of the food status parameter, e.g. via the interface 301.

The interface 301 may be configured to transmit the primary value to an external device, e.g. an electronic device acting as a client, e.g. in a monitoring response to a sender of a monitoring request.

The interface 301 may be configured to display the primary value to a user.

The one or more processors 303 may be configured to output the primary value by controlling and/or monitoring a process based on the primary value of the food status parameter. Example of a process include a packaging process, a production process, a purchase process, a transportation process, and/or a storage process.

The one or more processors 303 are optionally configured to perform any of the operations disclosed in Figs. 2A-2B. The operations of the food item server device 300 may be embodied in the form of executable logic routines (e.g., lines of code, software programs, etc.) that are stored on a non-transitory computer readable medium (e.g., the memory 302) and are executed by the one or more processors 303).

Furthermore, the operations of the electronic device 300 may be considered a method that the electronic device 300 is configured to carry out. Also, while the described functions and operations may be implemented in software, such functionality may as well be carried out via dedicated hardware or firmware, or some combination of hardware, firmware and/or software.

The memory 302 may be one or more of a buffer, a flash memory, a hard drive, a removable media, a volatile memory, a non-volatile memory, a random access memory (RAM), or other suitable device. In a typical arrangement, the memory 302 may include a non-volatile memory for long term data storage and a volatile memory that functions as system memory for the one or more processors 303. The memory 302 may exchange data with the one or more processors 303 over a data bus. Control lines and an address bus between the memory 302 and the one or more processors 303 also may be present (not shown in Fig. 4). The memory 302 is considered a non-transitory computer readable medium.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figs. 1-4 comprises some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications, and equivalents.

From the description above follows that, although various embodiments of the invention have been described and shown, the invention is not restricted thereto, but may also be embodied in other ways within the scope of the subject-matter defined in the following claims.

## Claims

1. A method, performed by an electronic device, for food item monitoring, the method comprising:
obtaining (S102) a food item identifier indicative of a food item;
obtaining (S104) first event data associated with the food item identifier, wherein the first event data is associated with a first event and is indicative of a first event type and a first event time of the first event;
determining (S106) a first value of a food status parameter of the food item at the time of the first event;
estimating (S108), based on a model for the food status parameter of the food item, a primary value of the food status parameter of the food item, the model having the first event type, and the first event time as input; and
outputting (S110) the primary value of the food status parameter.

2. Method according to claim 1, wherein the food item identifier is a unique identifier of a package associated with the food item.

3. Method according to claim 2, wherein the first event is a packaging event indicative of packaging of the food item associated with the package.

4. Method according to any of claims 1-3, wherein the method comprises obtaining (S112) food batch data of the food item, and wherein the model for the food status parameter of the food item has the food batch data as input.

5. Method according to any of claims 2-4, wherein the method comprises obtaining (S114) package data of the package, and wherein the model for the food status parameter of the food item has the package data as input.

6. Method according to any of claims 1-5, wherein the method comprises obtaining (S116) second event data associated with the food item identifier, wherein the second event data is associated with a second event and is indicative of a second event type and a second event time of the second event, and wherein the model for the food status parameter of the food item has the second event type and the second event time as input.

7. Method according to claim 6, wherein the second event is a sale event indicative of sale of the food item to a consumer.

8. Method according to any of claims 1-7, wherein the method comprises obtaining (S118) third event data associated with the food item identifier, wherein the third event data is associated with a third event and is indicative of a third event type and a third event time of the third event, and wherein the model for the food status parameter of the food item has the third event type and the third event time as input.

9. Method according to claim 8, wherein the third event is a storage event indicative of storage of the food item.

10. Method according to any of claims 1-9, wherein the method comprises obtaining (S120) a food status parameter identifier, and selecting (S122) the model for the food status parameter of the food item based on the food status parameter identifier.

11. Method according to any of claims 1-10, wherein obtaining (S102) a food item identifier comprises receiving (S102A) a monitoring request comprising the food item identifier.

12. Method according to any of claims 1-11, wherein outputting (S110) the primary value of the food status parameter comprises transmitting (S110A) the primary value to an external electronic device.

13. Method according to any of claims 1-12, wherein the method comprises obtaining (S124) environment data indicative of an environment of the food item, and wherein the model for the food status parameter of the food item has the environment data as input.

14. Method according to any of claims 1-13, wherein the method comprises obtaining (S126) a time parameter, and wherein the model for the food status parameter of the food item has the time parameter as input.

15. Food package system (1) comprising a food item server device (200), the food item server device comprising an interface (201), a memory (202), and one or more processors (203), wherein the food item server device (200) is configured to:
obtain a food item identifier indicative of a food item;
obtain first event data associated with the food item identifier, wherein the first event data is associated with a first event and is indicative of a first event type and a first event time of the first event;
determine a first value of a food status parameter of the food item at the time of the first event;
estimate, based on a model for the food status parameter of the food item, a primary value of the food status parameter of the food item, the model having the first event type and the first event time as input; and
output the primary value of the food status parameter.

16. An electronic device (300) comprising:
an interface;
one or more processors;
memory; and
one or more programs stored in the memory and configured to be executed by the one or more processors, the one or more programs including instructions for performing the method of any of claims 1-14.

17. A computer-readable storage medium storing one or more programs, the one or more programs comprising instructions which, when executed by an electronic device comprising one or more processors, cause the electronic device to perform the method of any of claims 1-14.
